(19) Europäisches Patentamt / European Patent Office / Office européen des brevets

(11) **EP 4 404 216 A1**

(12) **EUROPEAN PATENT APPLICATION**
published in accordance with Art. 153(4) EPC

(43) Date of publication:
**24.07.2024 Bulletin 2024/30**

(21) Application number: **22869708.2**

(22) Date of filing: **02.08.2022**

(51) International Patent Classification (IPC):
$H01B\ 1/06$ (2006.01)    $H01B\ 13/00$ (2006.01)
$H01M\ 4/62$ (2006.01)    $H01M\ 10/052$ (2010.01)
$H01M\ 10/0562$ (2010.01)

(52) Cooperative Patent Classification (CPC):
H01B 1/06; H01B 13/00; H01M 4/62; H01M 10/052;
H01M 10/0562; Y02E 60/10

(86) International application number:
**PCT/JP2022/029612**

(87) International publication number:
**WO 2023/042560 (23.03.2023 Gazette 2023/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.09.2021 JP 2021150520**

(71) Applicant: **Panasonic Intellectual Property Management Co., Ltd.**
**Kadoma-shi, Osaka 571-0057 (JP)**

(72) Inventor: **SAKAIDA, Masashi**
**Kadoma-shi, Osaka 571-0057 (JP)**

(74) Representative: **Grünecker Patent- und Rechtsanwälte**
**PartG mbB**
**Leopoldstraße 4**
**80802 München (DE)**

(54) **SOLID ELECTROLYTE MATERIAL AND BATTERY USING SAME**

(57) According to the present disclosure, a solid electrolyte material comprises Li, Ti, Al, and F. The solid electrolyte material has a specific surface area of greater than or equal to 5.7 m²/g. According to the present disclosure, a battery 1000 comprises a positive electrode 201, a negative electrode 203, and an electrolyte layer 202, which is disposed between the positive electrode 201 and the negative electrode 203. At least one selected from the group consisting of the positive electrode 201, the negative electrode 203, and the electrolyte layer 202 comprises the solid electrolyte material of the present disclosure.

FIG. 1

**Description**

Technical Field

The present disclosure relates to a solid electrolyte material and a battery using the same.

Background Art

Patent Literature 1 discloses an all-solid-state battery that uses a sulfide solid electrolyte.

Patent Literature 2 discloses $LiBF_4$ as a fluoride solid electrolyte material.

Citation List

Non Patent Literature

PTL 1: Japanese Unexamined Patent Application Publication No. 2011-129312
PTL 2: Japanese Unexamined Patent Application Publication No. 2008-277170

Summary of Invention

Technical Problem

An object of the present disclosure is to provide a solid electrolyte material that is suitable for lithium ion conduction and has improved contact with other materials. Solution to Problem

According to the present disclosure, a solid electrolyte material comprises Li, Ti, Al, and F, and the solid electrolyte material has a specific surface area of greater than or equal to 5.7 $m^2$/g.

Advantageous Effects of Invention

The present disclosure provides a solid electrolyte material that is suitable for lithium ion conduction and has improved contact with other materials.

Brief Description of Drawings

[Fig. 1] Fig. 1 is a cross-sectional view of a battery 1000, according to a second embodiment.
[Fig. 2] Fig. 2 is a schematic diagram of a pressure molding die 300, which is used for evaluating an ionic conductivity of solid electrolyte materials.
[Fig. 3] Fig. 3 is a graph showing a Cole-Cole plot obtained from an impedance measurement performed on a solid electrolyte material of Example 1.
[Fig. 4] Fig. 4 is a graph showing an initial discharge characteristic of batteries of Example 1 and Comparative Example 1.

Description of Embodiments

Embodiments of the present disclosure will be described below with reference to the drawings.

(First Embodiment)

According to a first embodiment, a solid electrolyte material comprises Li, Ti, Al, and F. The solid electrolyte material of the first embodiment has a specific surface area of greater than or equal to 5.7 $m^2$/g. In the present disclosure, the specific surface area of the solid electrolyte material is a specific surface area determined by a BET method.

The solid electrolyte material of the first embodiment is suitable for lithium ion conduction and has good contact with other materials. Accordingly, the solid electrolyte material of the first embodiment can reduce a resistance at an interface with one or more other materials. Examples of the other materials include active materials.

Typically, active materials used in lithium ion secondary batteries are polycrystalline materials. In many cases, surfaces of active materials are not flat and have protrusions and recesses such as small grooves or depressions. In all-solid-state batteries, unlike electrolyte solution-based batteries, it is desirable that the contact between an active material and the solid electrolyte be improved so that a resistance of the batteries can be reduced. Achieving this requires that the solid electrolyte be deformed, for example, by being compressed, so as to conform to the shape of the protrusions and recesses of the active material. However, in instances where the surface of the solid electrolyte is flat, and the solid electrolyte has a large particle diameter, the pressure applied during pressing is concentrated on the protrusions of the surface of the active material, and, consequently, good contact cannot be achieved for inner portions of the recesses. On the other hand, in instances where the particle diameter of the solid electrolyte is smaller than the recesses in the surface of the active material, the pressure is received in a state in which the solid electrolyte has entered the recesses, and, consequently, good contact can be achieved. Furthermore, in instances where the solid electrolyte has protrusions and recesses in a surface, the solid electrolyte can easily enter the recesses in the surface of the active material, compared with instances in which the surface of the solid electrolyte is flat, and, consequently, good contact between the solid electrolyte and the active material can be easily achieved. Having a small particle diameter or having protrusions and recesses in a surface means having a high specific surface area. That is, solid electrolytes with a high specific surface area are likely to have good contact with active materials. As a result, the resistance of batteries can be reduced, and, therefore, for example, charge-discharge characteristics of the batteries can be improved.

The solid electrolyte material of the first embodiment can be used, for example, to produce a battery having excellent charge-discharge characteristics. Examples of the battery include all-solid-state batteries. The all-solid-state batteries may be primary batteries or secondary batteries.

It is desirable that the solid electrolyte material of the first embodiment be sulfur-free. Sulfur-free solid electrolyte materials provide excellent safety because they do not produce hydrogen sulfide even when exposed to air. The sulfide solid electrolyte disclosed in Patent Literature 1 may produce hydrogen sulfide when exposed to air.

Since the solid electrolyte material of the first embodiment contains F, the solid electrolyte material can have high oxidation resistance. This is because F has a high redox potential. In addition, since F has a high electronegativity, F has a relatively strong bond with Li. As a result, typically, solid electrolyte materials containing Li and F have a low lithium ion conductivity. For example, the $LiBF_4$ disclosed in Patent Literature 2 has a low ionic conductivity of $6.67 \times 10^{-9}$ S/cm. In contrast, the solid electrolyte material of the first embodiment further contains Ti and Al, in addition to Li and F, and, consequently, can have an ionic conductivity of greater than or equal to $7 \times 10^{-9}$ S/cm, for example. That is, the solid electrolyte material of the first embodiment is suitable for lithium ion conduction.

The specific surface area of the solid electrolyte material of the first embodiment may be less than 100 $m^2/g$, less than or equal to 60 $m^2/g$, or less than or equal to 53.38 m2/g.

The specific surface area of the solid electrolyte material of the first embodiment may be greater than or equal to 8.3 $m^2/g$ or greater than or equal to 8.32 $m^2/g$.

The solid electrolyte material of the first embodiment may contain one or more additional anions, in addition to the anion of F, so that the ionic conductivity of the solid electrolyte material can be increased. Examples of the anions include those of Cl, Br, I, O, and Se.

A ratio of an amount of substance of the F to a sum of amounts of substance of the anions that form the solid electrolyte material of the first embodiment may be greater than or equal to 0.50 and less than or equal to 1.0 so that the oxidation resistance of the solid electrolyte material can be increased.

The anions that form the solid electrolyte material of the first embodiment may include only the anion of F so that the oxidation resistance of the solid electrolyte material can be improved. That is, the ratio of the amount of substance may be 1.0.

The solid electrolyte material of the first embodiment may consist essentially of Li, Ti, Al, and F. "The solid electrolyte material of the first embodiment consists essentially of Li, Ti, Al, and F" means that a ratio of a sum of the amounts of substance (i.e., a molar fraction) of Li, Ti, Al, and F to a sum of the amounts of substance of all the elements that form the solid electrolyte material of the first embodiment is greater than or equal to 90%. For example, the ratio (i.e., the molar fraction) may be greater than or equal to 95%. The solid electrolyte material of the first embodiment may consist only of Li, Ti, Al, and F.

The solid electrolyte material of the first embodiment may further comprise Zr.

The solid electrolyte material of the first embodiment may consist essentially of Li, Ti, Zr, Al, and F. "The solid electrolyte material of the first embodiment consists essentially of Li, Ti, Zr, Al, and F" means that a ratio of a sum of the amounts of substance (i.e., a molar fraction) of Li, Ti, Zr, Al, and F to a sum of the amounts of substance of all the elements that form the solid electrolyte material of the first embodiment is greater than or equal to 90%. For example, the ratio (i.e., the molar fraction) may be greater than or equal to 95%. The solid electrolyte material of the first embodiment may consist only of Li, Ti, Zr, Al, and F.

The solid electrolyte material of the first embodiment may contain one or more incidentally included elements. Examples of the elements include hydrogen, oxygen, and nitrogen. These elements may be present in raw material powders of the solid electrolyte material or in an atmosphere in which the solid electrolyte material is produced or stored.

In the solid electrolyte material of the first embodiment, a ratio of the amount of substance of the Li to a sum of the amounts of substance of the Ti and the Al may be greater than or equal to 1.12 and less than or equal to 5.07 so that the ionic conductivity of the solid electrolyte material can be further increased. In instances where the solid electrolyte material of the first embodiment further contains Zr, the ratio of the amount of substance of the Li to the sum of the amounts of substance of the Ti, the Zr, and the Al may be greater than or equal to 1.12 and less than or equal to 5.07.

The solid electrolyte material of the first embodiment may be a material represented by Formula 1, shown below.

$$Li_{6-(4-x)b}(Ti_{1-x}Al_x)_bF_6 \qquad (1)$$

In Formula 1, $0 < x < 1$ and $0 < b \leq 1.5$ are satisfied. Solid electrolyte materials having such a chemical composition have high ionic conductivity.

In Formula 1, $0.01 \leq x \leq 0.99$ may be satisfied, or $0.2 \leq x \leq 0.95$ may be satisfied, so that the ionic conductivity of the solid electrolyte material can be increased.

In Formula 1, the upper limit and the lower limit of the range of x may be defined by any combination of values selected from 0.01, 0.2, 0.4, 0.5, 0.5, 0.7, 0.8, 0.95, and 0.99.

In Formula 1, $0.7 \leq b \leq 1.3$ may be satisfied, or $0.9 \leq b \leq 1.04$ may be satisfied, so that the ionic conductivity of the solid electrolyte material can be increased.

In Formula 1, the upper limit and the lower limit of the range of b may be defined by any combination of values selected from 0.7, 0.8, 0.9, 0.96, 1, 1.04, 1.1, 1.2, and 1.3.

The solid electrolyte material of the first embodiment may be $Li_{2.7}Ti_{0.3}Al_{0.7}F_6$.

The solid electrolyte material of the first embodiment may be a material represented by Formula 2, shown below.

$$Li_{6-(4-x)b}(Ti_{1-x-y}Zr_yAl_x)_bF_6 \qquad (2)$$

In Formula 2, $0 < x < 1$, $0 < y < 1$, $0 < x+y < 1$, and $0 < b \leq 1.5$ are satisfied. Solid electrolyte materials having such a chemical composition have high ionic conductivity.

In Formula 2, $0.01 \leq x \leq 0.99$ may be satisfied, $0.2 \leq x \leq 0.95$ may be satisfied, or $0.7 \leq x \leq 0.8$ may be satisfied, so that the ionic conductivity of the solid electrolyte material can be increased.

In Formula 2, the upper limit and the lower limit of the range of x may be defined by any combination of values selected from 0.01, 0.2, 0.4, 0.5, 0.5, 0.7, 0.8, 0.95, and 0.99.

In Formula 2, $0.01 \leq y \leq 0.99$ may be satisfied, $0.05 \leq y \leq 0.8$ may be satisfied, or $0.1 \leq y \leq 0.2$ may be satisfied, so that the ionic conductivity of the solid electrolyte material can be increased.

In Formula 2, the upper limit and the lower limit of the range of y may be defined by any combination of values selected from 0.01, 0.1, 0.15, 0.2, 0.4, 0.5, 0.5, 0.7, 0.8, 0.95, and 0.99.

In Formula 2, $0.7 \leq b \leq 1.3$ may be satisfied, or $0.9 \leq b \leq 1.04$ may be satisfied, so that the ionic conductivity of the solid electrolyte material can be increased.

In Formula 2, the upper limit and the lower limit of the range of b may be defined by any combination of values selected from 0.7, 0.8, 0.9, 0.96, 1, 1.04, 1.1, 1.2, and 1.3.

The solid electrolyte material of the first embodiment may be $Li_{2.7}Ti_{0.1}Zr_{0.2}Al_{0.7}F_6$, $Li_{2.7}Ti_{0.2}Zr_{0.1}Al_{0.7}F_6$, or $Li_{2.8}Ti_{0.05}Zr_{0.15}Al_{0.8}F_6$.

The solid electrolyte material of the first embodiment may be crystalline or amorphous.

The solid electrolyte material of the first embodiment may comprise a crystalline phase represented by Formula 1 or Formula 2.

The solid electrolyte material of the first embodiment has a shape that is not limited. Examples of the shape include needle shapes, spherical shapes, and ellipsoidal shapes. The solid electrolyte material of the first embodiment may be particles. The solid electrolyte material of the first embodiment may have a pellet shape or a plate shape.

<Method for Producing Solid Electrolyte Material>

The solid electrolyte material of the first embodiment is produced, for example, in the following manner.

Raw material powders of halides, which are weighed such that a target chemical composition can be achieved, are mixed with an organic solvent in a mixing device while the powders are micronized.

For example, when $Li_{2.7}Ti_{0.3}Al_{0.7}F_6$ is the target chemical composition, LiF, $TiF_4$, and $AlF_3$ are provided in a molar ratio of approximately 2.7:0.3:0.7. The raw material powders may be provided in a pre-adjusted molar ratio such that a compositional change that can occur in a synthesis process can be offset. The raw material powders and an organic solvent are added to a mixing device, such as a planetary ball mill, and mixed together while the powders are micronized. That is, a process that uses a wet ball mill is performed. The raw material powders may be pre-mixed before being added to the mixing device.

After the mixing, the balls are removed to give a slurry in which the particles are dispersed. The slurry is dried at a temperature corresponding to the boiling point of the organic solvent used, to give a solid. The solid is ground in a mortar to give a reaction product.

In the instance where a wet process is used for micronization, the product resulting from the micronization can have a reduced particle diameter. That is, the specific surface area of the solid electrolyte material can be improved.

The solid obtained by drying the slurry may be dissolved in an organic solvent to be recrystallized. In this case, a further reduction in the particle diameter can be expected. Alternatively, the process in the wet ball mill may be performed after the raw material powders of the solid electrolyte material are dissolved in an organic solvent and recrystallized to have a reduced particle diameter.

The solid obtained by drying the slurry may be heat-treated in a vacuum or an inert atmosphere. The heat treatment is performed, for example, at a temperature of greater than or equal to 100°C and less than or equal to 300°C for 1 hour or more. The heat treatment may be performed in a sealed vessel, such as a quartz tube, so that a compositional change due to the heat treatment can be inhibited.

As described, the solid electrolyte material of the first embodiment can be produced by performing wet grinding, the wet grinding comprising grinding a mixture that comprises a raw material composition and a solvent, the raw material composition comprising constituent components of the solid electrolyte material.

One possible way to increase the specific surface area of the solid electrolyte material is to use balls having a smaller diameter in the wet ball mill. Another possible way is to increase the quantity of balls used in the wet ball mill. Another possible way is to extend the time of the process in the wet ball mill.

The solvent used in the wet ball mill may comprise at least one selected from the group consisting of $\gamma$-butyrolactone, propylene carbonate, butyl acetate, and tetralin. From the standpoint of a dielectric constant of the solvent, it is possible to use N-methyl-2-pyrrolidone (NMP) as the solvent.

(Second Embodiment)

A second embodiment will now be described. Descriptions given in the first embodiment may not be repeated.

According to the second embodiment, a battery comprises a positive electrode, an electrolyte layer, and a negative electrode. The electrolyte layer is disposed between the positive electrode and the negative electrode.

At least one selected from the group consisting of the positive electrode, the electrolyte layer, and the negative electrode comprises the solid electrolyte material of the first embodiment.

The battery of the second embodiment has excellent charge-discharge characteristics because the battery includes the solid electrolyte material of the first embodiment.

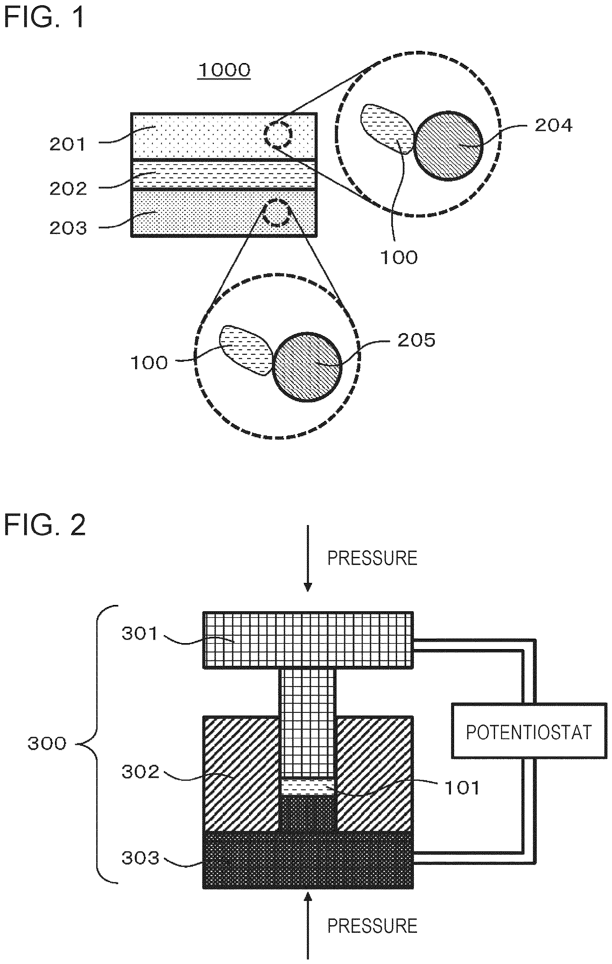

Fig. 1 is a cross-sectional view of a battery 1000 of the second embodiment.

The battery 1000 of the second embodiment includes a positive electrode 201, an electrolyte layer 202, and a negative electrode 203. The electrolyte layer 202 is disposed between the positive electrode 201 and the negative electrode 203.

The positive electrode 201 includes a positive electrode active material 204 and a solid electrolyte 100.

The electrolyte layer 202 contains an electrolyte material.

The negative electrode 203 includes a negative electrode active material 205 and the solid electrolyte 100.

The solid electrolyte 100 contains, for example, the solid electrolyte material of the first embodiment. The solid electrolyte 100 may be particles containing the solid electrolyte material of the first embodiment as a major component. The "particles containing the solid electrolyte material of the first embodiment as a major component" are particles in which the component that is present in the highest amount in terms of a molar ratio is the solid electrolyte material of the first embodiment. The solid electrolyte 100 may be particles made of the solid electrolyte material of the first embodiment.

The positive electrode 201 includes a material capable of occluding and releasing metal ions (e.g., lithium ions). The material is, for example, the positive electrode active material 204.

Examples of the positive electrode active material 204 include lithium transition metal oxides, transition metal fluorides, polyanions, fluorinated polyanionic materials, transition metal sulfides, transition metal oxyfluorides, transition metal oxysulfides, and transition metal oxynitrides. Examples of the lithium transition metal oxides include $Li(Ni,Co,Mn)O_2$, $Li(Ni,Co,Al)O_2$, and $LiCoO_2$.

In the present disclosure, "(A,B,C)" means "at least one selected from the group consisting of A, B, and C".

The positive electrode active material 204 has a shape that is not limited to a particular shape. The positive electrode active material 204 may be particles. The positive electrode active material 204 may have a median diameter of greater than or equal to 0.1 $\mu$m and less than or equal to 100 $\mu$m. When the positive electrode active material 204 has a median diameter of greater than or equal to 0.1 $\mu$m, the positive electrode active material 204 and the solid electrolyte 100 can be favorably dispersed in the positive electrode 201. Consequently, the charge-discharge characteristics of the battery 1000 are improved. When the positive electrode active material 204 has a median diameter of less than or equal to 100 $\mu$m, a lithium diffusion rate in the positive electrode active material 204 is improved. Consequently, a high-power operation of the battery 1000 can be achieved.

The positive electrode active material 204 may have a median diameter greater than that of the solid electrolyte 100. In this case, the positive electrode active material 204 and the solid electrolyte 100 can be favorably dispersed in the positive electrode 201.

In the positive electrode 201, a ratio of a volume of the positive electrode active material 204 to a sum of the volume of the positive electrode active material 204 and a volume of the solid electrolyte 100 may be greater than or equal to 0.30 and less than or equal to 0.95 so that an energy density and power of the battery 1000 can be improved.

The positive electrode active material 204 may include a coating layer formed on at least a portion of a surface of the positive electrode active material 204. For example, the coating layer may be formed on the surface of the positive electrode active material 204 before the positive electrode active material 204 is mixed with a conductive additive and a binding agent. Examples of a coating material that is included in the coating layer include sulfide solid electrolytes, oxide solid electrolytes, and halide solid electrolytes. In instances where the solid electrolyte 100 includes a sulfide solid electrolyte, the coating material may include the solid electrolyte material of the first embodiment so that oxidative decomposition of the sulfide solid electrolyte can be inhibited. In instances where the solid electrolyte 100 includes the solid electrolyte material of the first embodiment, the coating material may include an oxide solid electrolyte so that oxidative decomposition of the solid electrolyte material of the first embodiment can be inhibited. The oxide solid electrolyte may be lithium niobate, which exhibits excellent stability at high potentials. The inhibition of oxidative decomposition can in turn inhibit an increase in overvoltage of the battery 1000.

The positive electrode 201 may have a thickness of greater than or equal to 10 $\mu$m and less than or equal to 500 $\mu$m so that the energy density and power of the battery 1000 can be improved.

The electrolyte layer 202 contains an electrolyte material. The electrolyte material is, for example, a solid electrolyte material. The solid electrolyte material may include the solid electrolyte material of the first embodiment. The electrolyte layer 202 may be a solid electrolyte layer.

The electrolyte layer 202 may contain the solid electrolyte material of the first embodiment in an amount greater than or equal to 50 mass%. The electrolyte layer 202 may contain the solid electrolyte material of the first embodiment in an amount greater than or equal to 70 mass%. The electrolyte layer 202 may contain the solid electrolyte material of the first embodiment in an amount greater than or equal to 90 mass%. The electrolyte layer 202 may be made of only the solid electrolyte material of the first embodiment.

The solid electrolyte material of the first embodiment will hereinafter be referred to as a "first solid electrolyte material". A solid electrolyte material different from the first solid electrolyte material will be referred to as a "second solid electrolyte material".

The electrolyte layer 202 may contain not only the first solid electrolyte material but also a second solid electrolyte material. The first solid electrolyte material and the second solid electrolyte material may be uniformly dispersed in the electrolyte layer 202. A layer made of the first solid electrolyte material and a layer made of the second solid electrolyte material may be stacked on top of each other in a stacking direction of the battery 1000.

The battery of the second embodiment may include the positive electrode 201, a second electrolyte layer, a first electrolyte layer, and the negative electrode 203, which may be disposed in this order. A solid electrolyte material included in the first electrolyte layer may have a reduction potential lower than that of a solid electrolyte material included in the second electrolyte layer. In this case, the solid electrolyte material included in the second electrolyte layer can be used without being reduced. As a result, charge-discharge efficiency of the battery 1000 can be improved. For example, in instances where the second electrolyte layer contains the first solid electrolyte material, the first electrolyte layer may contain a sulfide solid electrolyte so that reductive decomposition of the first solid electrolyte material can be inhibited. In this case, the charge-discharge efficiency of the battery 1000 can be improved. The second electrolyte layer may contain the first solid electrolyte material. The first solid electrolyte material has high oxidation resistance, and, consequently, a battery having excellent charge-discharge characteristics can be realized.

The electrolyte layer 202 may be made of only the second solid electrolyte material.

The electrolyte layer 202 may have a thickness of greater than or equal to 1 $\mu$m and less than or equal to 1000 $\mu$m. When the electrolyte layer 202 has a thickness of greater than or equal to 1 $\mu$m, short-circuiting between the positive electrode 201 and the negative electrode 203 is unlikely to occur. When the electrolyte layer 202 has a thickness of less than or equal to 1000 $\mu$m, a high-power operation of the battery 1000 can be achieved.

Examples of the second solid electrolyte material include $Li_2MgX_4$, $Li_2FeX_4$, $Li(Al,Ga,In)X_4$, $Li_3(Al,Ga,In)X_6$, and LiI. X is at least one selected from the group consisting of F, Cl, Br, and I.

The electrolyte layer 202 may have a thickness of greater than or equal to 1 $\mu$m and less than or equal to 1000 $\mu$m so that the energy density and power of the battery 1000 can be improved.

The negative electrode 203 includes a material capable of occluding and releasing metal ions (e.g., lithium ions). The material is, for example, the negative electrode active material 205.

Examples of the negative electrode active material 205 include metal materials, carbon materials, oxides, nitrides, tin compounds, and silicon compounds. The metal materials may be elemental metals or alloys. Examples of the metal materials include lithium metals and lithium alloys. Examples of the carbon materials include natural graphite, coke, partially graphitized carbon, carbon fibers, spherical carbon, artificial graphite, and amorphous carbon. The negative electrode active material may be, for example, silicon (i.e., Si), tin (i.e., Sn), a silicon compound, or a tin compound; these are suitable from the standpoint of a capacity density.

The negative electrode active material 205 may be selected in consideration of the reduction resistance of the solid electrolyte material that is included in the negative electrode 203. For example, in instances where the negative electrode 203 includes the first solid electrolyte material, the negative electrode active material 205 may be a material capable of occluding and releasing lithium ions at greater than or equal to 0.27 V versus lithium. Examples of such negative electrode active materials include titanium oxides, indium metal, and lithium alloys. Examples of the titanium oxides include $Li_4Ti_5O_{12}$, $LiTi_2O_4$, and $TiO_2$. Using any of these negative electrode active materials can inhibit the first solid electrolyte material included in the negative electrode 203 from undergoing reductive decomposition. As a result, the charge-discharge efficiency of the battery 1000 can be improved.

The negative electrode active material 205 has a shape that is not limited to a particular shape. The negative electrode active material 205 may be particles. The negative electrode active material 205 may have a median diameter of greater than or equal to 0.1 $\mu$m and less than or equal to 100 $\mu$m. When the negative electrode active material 205 has a median diameter of greater than or equal to 0.1 $\mu$m, the negative electrode active material 205 and the solid electrolyte 100 can be favorably dispersed in the negative electrode 203. Consequently, the charge-discharge characteristics of the battery 1000 are improved. When the negative electrode active material 205 has a median diameter of less than or equal to 100 $\mu$m, a lithium diffusion rate in the negative electrode active material 205 is improved. Consequently, a high-power operation of the battery 1000 can be achieved.

The negative electrode active material 205 may have a median diameter greater than that of the solid electrolyte 100. In this case, the negative electrode active material 205 and the solid electrolyte 100 can be favorably dispersed in the negative electrode 203.

In the negative electrode 203, a ratio of a volume of the negative electrode active material 205 to a sum of the volume of the negative electrode active material 205 and the volume of the solid electrolyte 100 may be greater than or equal to 0.30 and less than or equal to 0.95 so that the energy density and power of the battery 1000 can be improved.

The negative electrode 203 may have a thickness of greater than or equal to 10 $\mu$m and less than or equal to 500 $\mu$m so that the energy density and power of the battery 1000 can be improved.

At least one selected from the group consisting of the positive electrode 201, the electrolyte layer 202, and the negative electrode 203 may include a second solid electrolyte material so that the ionic conductivity, chemical stability, and electrochemical stability can be increased.

The second solid electrolyte material may be a sulfide solid electrolyte.

Examples of the sulfide solid electrolyte include $Li_2S-P_2S_5$, $Li_2S-SiS_2$, $Li_2S-B_2S_3$, $Li_2S-GeS_2$, $Li_{3.25}Ge_{0.25}P_{0.75}S_4$, and $Li_{10}GeP_2S_{12}$.

In instances where the electrolyte layer 202 contains the first solid electrolyte material, the negative electrode 203 may contain a sulfide solid electrolyte so that reductive decomposition of the first solid electrolyte material can be inhibited. When the negative electrode active material is covered with a sulfide solid electrolyte, which is electrochemically stable, contact of the first solid electrolyte material with the negative electrode active material can be inhibited. As a result, an internal resistance of the battery 1000 can be reduced.

The second solid electrolyte material may be an oxide solid electrolyte.

Examples of the oxide solid electrolyte include

(i) NASICON-type solid electrolytes, such as $LiTi_2(PO_4)_3$ and element-substituted derivatives thereof,
(ii) perovskite-type solid electrolytes, such as $(LaLi)TiO_3$,
(iii) LISICON-type solid electrolytes, such as $Li_{14}ZnGe_4O_{16}$, $Li_4SiO_4$, $LiGeO_4$, and element-substituted derivatives thereof,
(iv) garnet-type solid electrolytes, such as $Li_7La_3Zr_2O_{12}$ and element-substituted derivatives thereof, and
(v) $Li_3PO_4$ and N-substituted derivatives thereof.

As stated above, the second solid electrolyte material may be a halide solid electrolyte.

Examples of the halide solid electrolyte include $Li_2MgX_4$, $Li_2FeX_4$, $Li(Al,Ga,In)X_4$, $Li_3(Al,Ga,In)X_6$, and LiI. X is at least one selected from the group consisting of F, Cl, Br, and I.

Other examples of the halide solid electrolyte are compounds represented by $Li_aMe_bY_cZ_6$. In the formula, $a + mb + 3c = 6$ and $c > 0$ are satisfied. Me is at least one selected from the group consisting of metalloid elements and metal elements other than Li or Y. Z is at least one selected from the group consisting of F, Cl, Br, and I. m represents the valence of Me. The metalloid elements are B, Si, Ge, As, Sb, and Te. The metal elements are all the elements (excluding hydrogen) from Groups 1 to 12 of the periodic table and all the elements (excluding B, Si, Ge, As, Sb, Te, C, N, P, O, S, and Se) from Groups 13 to 16 of the periodic table.

Me may be at least one selected from the group consisting of Mg, Ca, Sr, Ba, Zn, Sc, Al, Ga, Bi, Zr, Hf, Ti, Sn, Ta, and Nb, so that the ionic conductivity of the halide solid electrolyte can be improved.

The halide solid electrolyte may be $Li_3YCl_6$ or $Li_3YBr_6$.

The second solid electrolyte material may be an organic polymer solid electrolyte.

Examples of the organic polymer solid electrolyte include compounds of a polymeric compound and a lithium salt.

The polymeric compound may have an ethylene oxide structure. Polymeric compounds having an ethylene oxide structure can contain large amounts of a lithium salt and, therefore, can further increase the ionic conductivity.

Examples of the lithium salt include $LiPF_6$, $LiBF_4$, $LiSbF_6$, $LiAsF_6$, $LiSO_3CF_3$, $LiN(SO_2CF_3)_2$, $LiN(SO_2C_2F_5)_2$, $LiN(SO_2CF_3)(SO_2C_4F_9)$, and $LiC(SO_2CF_3)_3$. One lithium salt selected from these may be used alone. Alternatively, a mixture of two or more lithium salts selected from these may be used.

At least one selected from the group consisting of the positive electrode 201, the electrolyte layer 202, and the negative electrode 203 may include a nonaqueous electrolyte solution, a gel electrolyte, or an ionic liquid so that the transfer of lithium ions can be facilitated to improve the power characteristics of the battery.

The nonaqueous electrolyte solution includes a nonaqueous solvent and a lithium salt dissolved in the nonaqueous solvent.

Examples of the nonaqueous solvent include cyclic carbonate solvents, chain carbonate solvents, cyclic ether solvents, chain ether solvents, cyclic ester solvents, chain ester solvents, and fluorinated solvents. Examples of the cyclic carbonate solvents include ethylene carbonate, propylene carbonate, and butylene carbonate. Examples of the chain carbonate solvents include dimethyl carbonate, ethyl methyl carbonate, and diethyl carbonate. Examples of the cyclic ether solvents include tetrahydrofuran, 1,4-dioxane, and 1,3-dioxolane. Examples of the chain ether solvents include 1,2-dimethoxyethane and 1,2-diethoxyethane. Examples of the cyclic ester solvents include γ-butyrolactone. Examples of the chain ester solvents include methyl acetate. Examples of the fluorinated solvents include fluoroethylene carbonate, fluoromethyl propionate, fluorobenzene, fluoroethyl methyl carbonate, and fluorodimethylene carbonate. One nonaqueous solvent selected from these may be used alone. Alternatively, a combination of two or more nonaqueous solvents selected from these may be used.

Examples of the lithium salt include $LiPF_6$, $LiBF_4$, $LiSbF_6$, $LiAsF_6$, $LiSO_3CF_3$, $LiN(SO_2CF_3)_2$, $LiN(SO_2C_2F_5)_2$, $LiN(SO_2CF_3)(SO_2C_4F_9)$, and $LiC(SO_2CF_3)_3$. One lithium salt selected from these may be used alone. Alternatively, a mixture of two or more lithium salts selected from these may be used. A concentration of the lithium salt is in a range of, for example, greater than or equal to 0.5 mol/L and less than or equal to 2 mol/L.

The gel electrolyte may be a polymeric material impregnated with a nonaqueous electrolyte solution. Examples of the polymeric material include polyethylene oxide, polyacrylonitrile, polyvinylidene fluoride, polymethylmethacrylate, and polymers having an ethylene oxide linkage.

Examples of a cation included in the ionic liquid include

(i) aliphatic chain quaternary salts, such as tetraalkylammoniums or tetraalkylphosphoniums,
(ii) aliphatic cyclic ammoniums, such as pyrrolidiniums, morpholiniums, imidazoliniums, tetrahydropyrimidiniums, piperaziniums, and piperidiniums, and
(iii) nitrogen-containing heterocyclic aromatic cations, such as pyridiniums and imidazoliums.

Examples of an anion included in the ionic liquid include $PF_6^-$, $BF_4^-$, $SbF_6^-$, $AsF_6^-$, $SO_3CF_3^-$, $N(SO_2CF_3)_2^-$, $N(SO_2C_2F_5)_2^-$, $N(SO_2CF_3)(SO_2C_4F_9)^-$, and $C(SO_2CF_3)_3^-$.

The ionic liquid may contain a lithium salt.

At least one selected from the group consisting of the positive electrode 201, the electrolyte layer 202, and the negative electrode 203 may include a binding agent so that adhesion between particles can be improved.

Examples of the binding agent include polyvinylidene fluoride, polytetrafluoroethylene, polyethylene, polypropylene, aramid resins, polyamides, polyimides, polyamide-imides, polyacrylonitrile, polyacrylic acids, poly(methyl acrylate), poly(ethyl acrylate), poly(hexyl acrylate), polymethacrylic acids, poly(methyl methacrylate), poly(ethyl methacrylate), poly(hexyl methacrylate), polyvinyl acetate, polyvinylpyrrolidone, polyethers, polyether sulfones, hexafluoropolypropylene, styrene butadiene rubber, and carboxymethyl cellulose. Other examples of the binding agent are copolymers. For example, the binding agent may be a copolymer of two or more materials selected from the group consisting of tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acids, and hexadiene. The binding agent may be a mixture of two or more materials selected from these.

At least one selected from the positive electrode 201 and the negative electrode 203 may include a conductive additive so that electron conductivity can be improved.

Examples of the conductive additive include

(i) graphites, such as natural graphite and artificial graphite,
(ii) carbon blacks, such as acetylene black and Ketjen black,
(iii) conductive fibers, such as carbon fibers and metal fibers,
(iv) carbon fluoride,
(v) metal powders, such as aluminum powders,
(vi) conductive whiskers, such as zinc oxide whiskers and potassium titanate whiskers,
(vii) conductive metal oxides, such as titanium oxide, and
(viii) conductive polymers, such as polyaniline, polypyrrole, and polythiophene. In instances where cost reduction is to be achieved, a conductive additive among those of (i) or (ii) may be used.

Examples of a shape of the battery of the second embodiment include coin shapes, cylindrical shapes, prismatic shapes, sheet shapes, button shapes, flat shapes, and stack shapes.

The battery of the second embodiment may be manufactured, for example, as follows. Materials for forming the positive electrode, materials for forming the electrolyte layer, and materials for forming the negative electrode are prepared, and a stack in which the positive electrode, the electrolyte layer, and the negative electrode are disposed in this order is produced with a known method.

EXAMPLES

The present disclosure will now be described in more detail with reference to Examples and a Comparative Example.

EXAMPLE 1

(Preparation of Solid Electrolyte Material)

In an argon atmosphere with a dew point of -60°C or less (hereinafter referred to as a dry argon atmosphere), raw material powders of LiF, $TiF_4$, and $AlF_3$ were provided in a molar ratio of $LiF:TiF_4:AlF_3 = 2.7:0.3:0.7$. The raw material powders were added to a 45-cc planetary ball mill pot along with 0.5 mm$\varphi$ balls (25 g). An organic solvent, namely, $\gamma$-butyrolactone (GBL), was added dropwise to the pot such that a solids content of 50% was achieved. The solids content is calculated by {(mass of the raw materials added)/(mass of the raw materials added + mass of the solvent added)} $\times$ 100. A milling process was performed in a planetary ball mill at 500 rpm for 12 hours. After the milling process, the balls were removed to give a slurry. The resulting slurry was dried in a mantle heater at 200°C for 1 hour under a nitrogen flow. The resulting solid was ground in a mortar to give a powder of a solid electrolyte material of Example 1. The solid electrolyte material of Example 1 had a chemical composition represented by $Li_{2.7}Ti_{0.3}Al_{0.7}F_6$.

(Evaluation of Ionic Conductivity)

Fig. 2 is a schematic diagram of a pressure molding die 300, which was used for evaluating the ionic conductivity of solid electrolyte materials.

The pressure molding die 300 included an upper punch 301, a die 302, and a lower punch 303. The die 302 was made of an insulating polycarbonate. The upper punch 301 and the lower punch 303 were made of electron-conductive stainless steel.

With the pressure molding die 300 illustrated in Fig. 2, the ionic conductivity of the solid electrolyte material of Example 1 was evaluated in the following manner.

In a dry atmosphere with a dew point of -30°C or less, the powder of the solid electrolyte material of Example 1 was loaded into the pressure molding die 300. In the pressure molding die 300, a pressure of 400 MPa was applied to the solid electrolyte material of Example 1 with the upper punch 301 and the lower punch 303.

In the state in which the pressure was applied, the upper punch 301 and the lower punch 303 were connected to a potentiostat (VSP-300, Bio-Logic) equipped with a frequency response analyzer. The upper punch 301 was connected to a working electrode and a potential measurement terminal. The lower punch 303 was connected to a counter electrode and a reference electrode. An impedance of the solid electrolyte material was measured at room temperature with an electrochemical impedance measurement method.

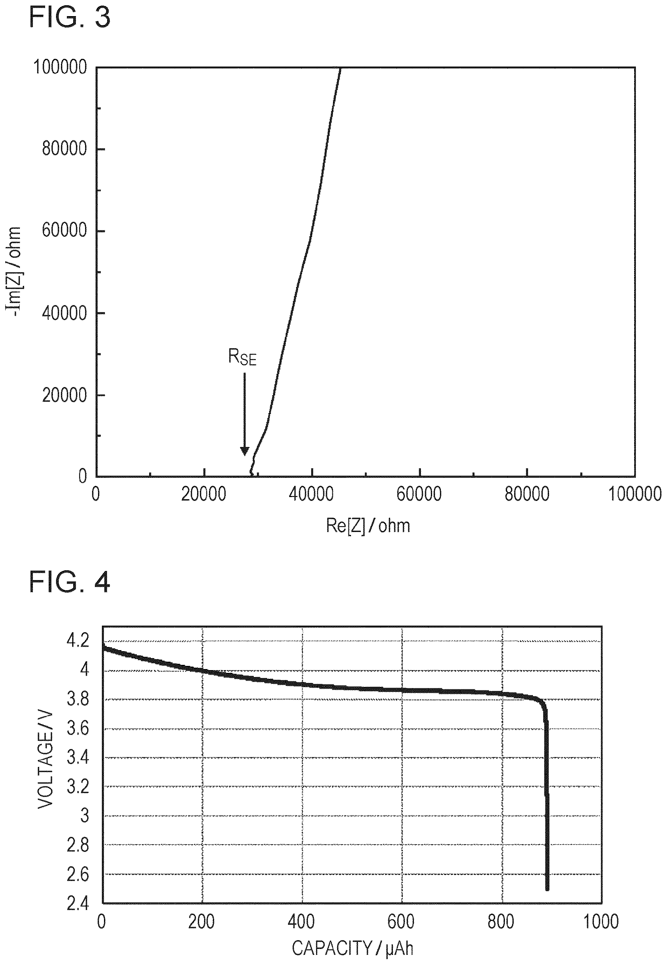

Fig. 3 is a graph showing a Cole-Cole plot obtained from the impedance measurement performed on the solid electrolyte material of Example 1.

In Fig. 3, the real value of the impedance at a measurement point at which the absolute value of the phase of the complex impedance was a minimum was considered to be a resistance value with respect to the ion conduction of the solid electrolyte material. In Fig. 3, see an arrow $R_{SE}$, which indicates the real value. The ionic conductivity was calculated by using the resistance value, according to Equation 3, shown below.

$$\sigma = (R_{SE} \times S/t)^{-1} \quad (3)$$

$\sigma$ is the ionic conductivity. S is an area of contact of the solid electrolyte material with the upper punch 301. That is, S is equal to a cross-sectional area of the hollow portion of the die 302, illustrated in Fig. 3. $R_{SE}$ is the resistance value of the solid electrolyte material as determined by the impedance measurement. t is a thickness of the solid electrolyte material. That is, t is a thickness of a layer formed of a powder 101 of the solid electrolyte material, illustrated in Fig. 3.

The ionic conductivity of the solid electrolyte material of Example 1, which was measured at 25°C, was $2.94 \times 10^{-6}$ S/cm.

(Measurement of Specific Surface Area)

The specific surface area was measured with a specific surface area and pore distribution analyzer (Belsorp Mini X, manufactured by MicrotracBEL). The specific surface area determined with the analyzer will hereinafter be referred to as a "BET specific surface area".

In an air atmosphere with a dew point of -40°C or less, the powder (approximately 1 g) of the solid electrolyte material of Example 1 was added to a dedicated test tube.

Vacuum drying, which was a pretreatment, was performed at 80°C for 1 hour.

The mass of the added sample was measured from the difference between the weight of the test tube after the pretreatment, the tube containing the sample, and the weight of the test tube before the sample was added thereto.

The measurement of the BET specific surface area was performed on the pretreated test tube, and the result was that the specific surface area of the solid electrolyte material of Example 1 was 29.00 $m^2$/g.

(Preparation of Battery)

In a dry argon atmosphere, the solid electrolyte material of Example 1 and $LiCoO_2$, which is an active material, were provided in a volume ratio of 30:70. The materials were mixed in an agate mortar. In this manner, a positive electrode mixture was prepared.

In an insulating cylinder having an inside diameter of 9.5 mm, $Li_3PS_4$ (57.41 mg), the solid electrolyte material of Example 1 (26 mg), and the positive electrode mixture (9.1 mg) were stacked in this order. A pressure of 300 MPa was applied to the resulting multilayer body to form a first electrolyte layer, a second electrolyte layer, and a positive electrode. That is, the second electrolyte layer, which was formed from the solid electrolyte material of Example 1, was held between the first electrolyte layer and the positive electrode. The first electrolyte layer had a thickness of 450 $\mu$m, and the second electrolyte layer had a thickness of 150 $\mu$m.

Next, metallic Li (thickness: 200 $\mu$m) was stacked on the first electrolyte layer. A pressure of 80 MPa was applied to the resulting multilayer body to form a negative electrode.

Next, current collectors formed from stainless steel were attached to the positive electrode and the negative electrode, and current collector leads were attached to the current collectors.

Lastly, the interior of the insulating cylinder was isolated from the ambient environment with an insulating ferrule, and thus, the interior of the cylinder was sealed. In this manner, a battery of Example 1 was produced.

(Charge-Discharge Test)

Fig. 4 is a graph showing an initial discharge characteristic of the battery of Example 1. The initial charge-discharge characteristic was measured in the following manner.

The battery of Example 1 was placed in a constant-temperature oven at 85°C.

The battery of Example 1 was charged at a current density of 67.6 $\mu$A/cm$^2$ until a voltage of 4.2 V was reached. The current density corresponds to a 0.05 C rate.

Next, the battery of Example 1 was discharged at a current density of 67.6 $\mu$A/cm$^2$ until a voltage of 2.5 V was reached.

The result of the charge-discharge test was that the battery of Example 1 had an initial discharge capacity of 891 $\mu$Ah.

EXAMPLES 2 to 14

(Preparation of Solid Electrolyte Material)

In Examples 2 to 8 and 12 to 14, raw material powders of LiF, $TiF_4$, and $AlF_3$ were provided in a molar ratio of $LiF:TiF_4:AlF_3 = 2.7:0.3:0.7$.

In Example 9, raw material powders of LiF, $TiF_4$, $ZrF_4$, and $AlF_3$ were provided in a molar ratio of $LiF:TiF_4:ZrF_4:AlF_3 = 2.7:0.1:0.2:0.7$.

In Example 10, raw material powders of LiF, $TiF_4$, $ZrF_4$, and $AlF_3$ were provided in a molar ratio of $LiF:TiF_4:ZrF_4:AlF_3 = 2.7:0.2:0.1:0.7$.

In Example 11, raw material powders of LiF, $TiF_4$, $ZrF_4$, and $AlF_3$ were provided in a molar ratio of $LiF:TiF_4:ZrF_4:AlF_3 = 2.8:0.05:0.15:0.7$.

Regarding the milling process, Table 1 shows the solvent, the solids content, the ball diameter, the ball quantity, the process time, and the drying conditions.

Solid electrolyte materials of Examples 2 to 14 were prepared in the same manner as in Example 1, except that the conditions shown in Table 1 were used.

(Evaluation of Ionic Conductivity)

The ionic conductivity of the solid electrolyte materials of Examples 2 to 14 was measured in the same manner as in Example 1. The measurement results are shown in Table 1.

(Measurement of Specific Surface Area)

The BET specific surface area of the solid electrolyte materials of Examples 2 to 14 was measured in the same manner as in Example 1. The measurement results are shown in Table 1.

(Charge-Discharge Test)

Batteries of Examples 2 to 14 were produced with the solid electrolyte materials of Examples 2 to 14 in the same manner as in Example 1.

A charge-discharge test was conducted on the batteries of Examples 2 to 14 in the same manner as in Example 1. The result was that the batteries of Examples 2 to 14 were favorably charged and discharged as with the battery of Example 1.

REFERENCE EXAMPLE 1

In a dry argon atmosphere, raw material powders of LiF, $TiF_4$, and $AlF_3$ were provided in a molar ratio of $LiF:ZrF_4:AlF_3 = 2.7:0.3:0.7$. The raw material powders were ground and mixed in a mortar. The resulting mixed powder was added to a 45-cc planetary ball mill pot along with 5 mm$\varphi$ balls (25 g). A milling process was performed in a planetary ball mill at 500 rpm for 12 hours. In this manner, a solid electrolyte material of Reference Example 1 was prepared.

As described, the solid electrolyte material of Reference Example 1 was prepared in a dry ball mill, without using an organic solvent.

The ionic conductivity and the specific surface area of the solid electrolyte material of Reference Example 1 were measured in the same manner as in Example 1.

The ionic conductivity, which was measured at 25°C, was $6.85 \times 10^{-6}$ S/cm.

The measured specific surface area was 5.67 $m^2$/g.

COMPARATIVE EXAMPLE 1

$LiBF_4$ was used as a solid electrolyte material, and the ionic conductivity was measured in the same manner as in Example 1. The result was that the ionic conductivity, which was measured at 25°C, was $6.67 \times 10^{-9}$ S/cm.

A battery of Comparative Example 1 was produced in the same manner as in Example 1, except that the solid electrolyte material of Comparative Example 1 was used as the solid electrolyte for use in the positive electrode mixture and the electrolyte layer.

A charge-discharge test was conducted on the battery of Comparative Example 1 in the same manner as in Example 1.

The initial discharge capacity of the battery of Comparative Example 1 was less than or equal to 0.01 $\mu$Ah. That is, the battery of Comparative Example 1 was not successfully charged or discharged.

[Table 1]

| | Chemical composition | Synthesis method | Solvent | Solids content [%] | Ball diameter [mm] | Ball quantity [g] | Process time [h] | Drying conditions | BET [m²/g] | Ionic conductivity [S/cm] |
|---|---|---|---|---|---|---|---|---|---|---|
| Example 1 | $Li_{2.7}Ti_{0.3}Al_{0.7}F_6$ | Wet BM | GBI, | 30 | 0.5 | 25 | 12 | 200°C, 1 h | 29 | $2.94 \times 10^{-6}$ |
| Example 2 | $Li_{2.7}Ti_{0.3}Al_{0.7}F_6$ | Wet BM | GBL | 30 | 1 | 25 | 12 | 200°C, 1 h | 22.35 | $1.53 \times 10^{-7}$ |
| Example 3 | $Li_{2.7}Ti_{0.3}Al_{0.7}F_6$ | Wet BM | GBL | 30 | 3 | 25 | 12 | 200°C, 1 h | 12.95 | $3.17 \times 10^{-7}$ |
| Example 4 | $Li_{2.7}Ti_{0.3}Al_{0.7}F_6$ | Wet BM | GBL | 30 | 2 | 25 | 4 | 200°C, 1 h | 10.33 | $1.31 \times 10^{-7}$ |
| Example 5 | $Li_{2.7}Ti_{0.3}Al_{0.7}F_6$ | Wet BM | GBL | 30 | 3 | 25 | 4 | 200°C, 1 h | 8.32 | $1.06 \times 10^{-7}$ |
| Example 6 | $Li_{2.7}Ti_{0.3}Al_{0.7}F_6$ | Wet BM | GBL | 30 | 1 | 40 | 12 | 200°C, 1 h | 31.53 | $2.52 \times 10^{-6}$ |
| Example 7 | $Li_{2.7}Ti_{0.3}Al_{0.7}F_6$ | Wet BM | GBL | 30 | 1 | 25 | 48 | 200°C, 1 h | 53.38 | $1.48 \times 10^{-6}$ |
| Example 8 | $Li_{2.7}Ti_{0.3}Al_{0.7}F_6$ | Wet BM | GBI, | 30 | 3 | 25 | 48 | 200°C, 1 h | 30.96 | $2.86 \times 10^{-6}$ |
| Example 9 | $Li_{2.7}Ti_{0.1}Zr_{0.2}Al_{0.7}F_6$ | Wet BM | GBL | 30 | 0.5 | 25 | 12 | 200°C, 1 h | 39.69 | $6.50 \times 10^{-7}$ |
| Example 10 | $Li_{2.7}Ti_{0.2}Zr_{0.1}Al_{0.7}F_6$ | Wet BM | GBL | 30 | 0.5 | 25 | 12 | 200°C, 1 h | 24.69 | $2.22 \times 10^{-6}$ |
| Example 11 | $Li_{2.8}Ti_{0.05}Zr_{0.15}Al_{0.8}F_6$ | Wet BM | GBL | 30 | 0.5 | 25 | 12 | 200°C, 1 h | 26.24 | $1.71 \times 10^{-7}$ |
| Example 12 | $Li_{2.7}Ti_{0.3}Al_{0.7}F_6$ | Wet BM | Butyl acetate | 25 | 0.5 | 25 | 12 | 120°C, 1 h, →200°C, 1 h | 26.5 | $3.63 \times 10^{-7}$ |
| Example 13 | $Li_{2.7}Ti_{0.3}Al_{0.7}F_6$ | Wet BM | Propylene carbonate | 30 | 0.5 | 25 | 12 | 230°C, 1 h | 43.68 | $2.62 \times 10^{-6}$ |
| Example 14 | $Li_{2.7}Ti_{0.3}Al_{0.7}F_6$ | Wet BM | Tetralin | 30 | 1 | 25 | 12 | 210°C, 1 h | 18.38 | $1.71 \times 10^{-7}$ |
| Reference Example 1 | $Li_{2.7}Ti_{0.3}Al_{0.7}F_6$ | Dry BM | | | 5 | 25 | 12 | | 5.67 | $6.85 \times 10^{-6}$ |
| Comparative Example 1 | $LiBF_4$ | - | - | - | - | - | - | - | - | $6.67 \times 10^9$ |

<Discussion>

The solid electrolyte materials of Examples 1 to 14 had an ionic conductivity of greater than or equal to $7 \times 10^{-9}$ S/cm at room temperature and had a specific surface area of greater than or equal to 5.7 $m^2/g$. In contrast, the solid electrolyte material of Reference Example 1, which was prepared in a dry ball mill, had a low specific surface area value of 5.67 $m^2/g$.

The batteries of Examples 1 to 14 were all successfully charged and discharged at 85°C. In contrast, the battery of Comparative Example 1 was not successfully charged or discharged.

The solid electrolyte materials of Examples 1 to 14 are sulfur-free and, therefore, do not produce hydrogen sulfide.

As described above, the solid electrolyte materials of the present disclosure have high lithium ion conductivity and are suitable for providing batteries that can be favorably charged and discharged.

Industrial Applicability

Solid electrolyte materials of the present disclosure are utilized, for example, in all-solid-state lithium ion secondary batteries.

Reference Signs List

100 solid electrolyte
101 powder of solid electrolyte material
201 positive electrode
202 electrolyte layer
203 negative electrode
204 positive electrode active material
205 negative electrode active material
300 pressure molding die
301 upper punch
302 die
303 lower punch
1000 battery

**Claims**

1. A solid electrolyte material comprising Li, Ti, Al, and F, wherein
the solid electrolyte material has a specific surface area of greater than or equal to 5.7 $m^2/g$.

2. The solid electrolyte material according to claim 1, wherein a ratio of an amount of substance of the F to a sum of amounts of substance of anions that form the solid electrolyte material is greater than or equal to 0.50 and less than or equal to 1.0.

3. The solid electrolyte material according to claim 1 or 2, wherein the solid electrolyte material is represented by Formula 1:

$$Li_{6-(4-x)b}(Ti_{1-x}Al_x)_bF_6 \qquad (1)$$

where $0 < x < 1$ and $0 < b \leq 1.5$ are satisfied.

4. The solid electrolyte material according to claim 1 or 2, further comprising Zr, wherein the solid electrolyte material is represented by Formula 2:

$$Li_{6-(4-x)b}(Ti_{1-x-y}Zr_yAl_x)_bF_6 \qquad (2)$$

where $0 < x < 1$, $0 < y < 1$, $0 < x+y < 1$, and $0 < b \leq 1.5$ are satisfied.

5. The solid electrolyte material according to any one of claims 1 to 4, wherein the specific surface area is less than 100 $m^2$/g.

6. The solid electrolyte material according to claim 5, wherein the specific surface area is less than 60 $m^2$/g.

7. The solid electrolyte material according to any one of claims 1 to 6, wherein the specific surface area is greater than or equal to 8.3 $m^2$/g.

8. A method for producing the solid electrolyte material according to any one of claims 1 to 7 comprising performing wet grinding, the wet grinding comprising grinding a mixture that comprises a raw material composition and a solvent, the raw material composition comprising constituent components of the solid electrolyte material.

9. The production method according to claim 8, wherein the raw material composition comprises LiF.

10. The production method according to claim 8 or 9, wherein the solvent comprises at least one selected from the group consisting of $\gamma$-butyrolactone, propylene carbonate, butyl acetate, and tetralin.

11. A battery comprising:

a positive electrode;
a negative electrode; and
an electrolyte layer disposed between the positive electrode and the negative electrode, wherein
at least one selected from the group consisting of the positive electrode, the negative electrode, and the electrolyte layer comprises the solid electrolyte material according to any one of claims 1 to 7.

# FIG. 1

# FIG. 2

# FIG. 3

# FIG. 4

<div align="center">

**INTERNATIONAL SEARCH REPORT**

</div>

| | International application No. |
|---|---|
| | **PCT/JP2022/029612** |

| A. | CLASSIFICATION OF SUBJECT MATTER |
|---|---|

*H01B 1/06*(2006.01)i; *H01B 13/00*(2006.01)i; *H01M 4/62*(2006.01)i; *H01M 10/052*(2010.01)i; *H01M 10/0562*(2010.01)i
FI:  H01B1/06 A; H01M10/052; H01M4/62 Z; H01B13/00 Z; H01M10/0562

According to International Patent Classification (IPC) or to both national classification and IPC

| B. | FIELDS SEARCHED |
|---|---|

Minimum documentation searched (classification system followed by classification symbols)
   H01B1/06; H01B13/00; H01M4/62; H01M10/052; H01M10/0562

Documentation searched other than minimum documentation to the extent that such documents are included in the fields searched

   Published examined utility model applications of Japan 1922-1996
   Published unexamined utility model applications of Japan 1971-2022
   Registered utility model specifications of Japan 1996-2022
   Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 111370755 A (LIYANG TIANMU PILOT BATTERY MATERIAL TECHNOLOGY CO., LTD.) 03 July 2020 (2020-07-03) paragraphs [0040]-[0096], fig. 1-5 | 1, 5-11 |
| A | | 2-4 |
| Y | WO 2018/193992 A1 (TOYOTA MOTOR CO LTD) 25 October 2018 (2018-10-25) paragraphs [0020]-[0023], [0044]-[0048], [0069] | 1, 5-11 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 October 2022** | **18 October 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/029612**

| Patent document cited in search report | | | Publication date (day/month/year) | Patent family member(s) | Publication date (day/month/year) |
|---|---|---|---|---|---|
| CN | 111370755 | A | 03 July 2020 | (Family: none) | |
| WO | 2018/193992 | A1 | 25 October 2018 | US 2020/0119396 A1 paragraphs [0036]-[0046], [0100]-[0114], [0174] | |

Form PCT/ISA/210 (patent family annex) (January 2015)

**EP 4 404 216 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011129312 A
- JP 2008277170 A